# EUROPEAN PATENT APPLICATION

(11) **EP 4 571 962 A1**
(43) Date of publication of application: **18.06.2025**
(21) Application number: 23216515.9
(22) Date of filing: 14.12.2023
(51) Int. Cl.: H01M 50/152, H01M 50/559, H01M 50/107, H01M 50/166, H01M 50/531, H01M 50/627, H01M 10/04

(54) **BATTERY CELL AND METHOD FOR MANUFACTURING A BATTERY CELL**

(71) Applicant: Customcells Holding GmbH, 25524 Itzehoe (DE)
(72) Inventor: Günther, Max, Itzehoe (DE); de Righetti, Philip, Itzehoe (DE)
(74) Representative: LKGLOBAL Lorenz & Kopf Patentanwalt Attorney at Law PartG mbB

(57) **Abstract**

A first aspect of the present disclosure is related to a battery cell, comprising:
- an electrode stack with two electrode layers, an anode layer and a cathode layer, wherein each electrode layer comprises a current collector;
- a can that comprises the electrode stack;
- a lid arranged on top of the can and directly connected to one or both current collectors of the electrode stack.

## Description

### Technical Field

This disclosure is related to battery cells and methods for manufacturing battery cells.

### Background

In cylindrical battery cells, like lithium-ion or alkaline batteries, the electrode roll needs to be connected to the battery cell contacts. The electrode stack inside the cell casing comprises layers of anode and cathode materials wound-up in a spiral or jelly-roll configuration, separated by a porous separator and soaked in an electrolyte solution. Terminal tabs extend from the electrode assembly and serve as connection means to a contact means that is further connected to the cell contact. The battery cell has two such connection means-one for the cathode and one for the anode. These contacts are typically metal caps or pins. The terminal tabs of the electrode assembly are connected to the connection means through methods such as welding or crimping, ensuring a secure electrical connection. Further improvements, such as weight reduction and reduction of complexity is desired.

### Summary

An object of the present disclosure is to improve a battery cell.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of the present disclosure is related to a battery cell,
comprising:
- an electrode stack with two electrode layers, an anode layer and a cathode layer, wherein each electrode layer comprises a current collector;
- a can that comprises the electrode stack;
- a lid arranged on top of the can and directly connected to one or both current collectors of the electrode stack.

A battery cell can comprise a cylindrically formed electrode stack. Additionally or alternatively, a wound-up electrode stack can have a form different from an ideal cylinder, e.g. oval, elliptic, or even rectangular, wherein in the latter the curved surface comprises a rather flat surface part and a sharply curved surface part at the edges of the electrode stack in order to achieve a wound-up electrode stack. In fact, a wound-up electrode stack can also be used for a prismatic battery architecture or a pouch-cell-based battery architecture. In particular a wound-up electrode stack can have a form adapted to an outer casing, wherein the outer casing might be formed according to environmental requirements that are not based on the electrical battery, e.g. based on a form of a car chassis.

A top of a wound-up electrode stack refer to the two opposite ends of the electrode stack that are separated by the curved surface. The top of the wound-up electrode stack can be the end where one pole (cathode) is located. The bottom of the electrode stack can be the end where the other pole (anode) is located.

An electrode stack may consist of an anode layer and a cathode layer, separated by a separator layer. Additionally, the electrode stack can either be saturated with an electrolyte layer or remain in a dry state.

Current collectors serve as the points of electrical contact between the internal electrode stack and the external circuit of the battery. Battery cells, such as lithium-ion batteries, have two types of current collectors - one for the cathode and one for anode. The current collectors for the two different electrode types can be made of different materials. An anode current collector can be made of copper (or another conductor such as steel, gold,etc.) and is attached to the negative electrode material. It can extend from the wound-up electrode stack and is connected to the negative terminal of the battery. A cathode current collector can be made of aluminum (or another conductor such as steel, gold,etc.) and is attached to the positive electrode material. It can extend from the wound-up electrode stack and is connected to the positive terminal of the battery.

A current collector can be an uncoated area of an electrode (in particular in case of a so-called "tabless" design of an electrode). A current collector can also be referred to as "tab". A current collector can be a specially formed conductor attached to an electrode. A current collector can refer to a conductive strip and/or foil (e.g. formed of metal) that extends from the electrode stack inside a battery cell to provide an external electrical connection. One or more current collectors can be thin, in particular only a few micrometer thick. A plurality of current collectors can be formed at an edge of an electrode, e.g. as an electrode extension and/or as an uncoated part of the electrode. The current collectors then extend similar to teeth or cams on the long side of the unwound electrode layer. One or more tabs can be made of the same material as the electrode and/or of a different conductive material. After the electrode stack is wound-up one or more current collectors can extend axially to the electrode stack, in particular parallel to an axis around which the electrode stack is wound-up. The current collectors can be angled, folded or plated such that the form an area next, in particular parallel, to a top or a bottom of a wound-up electrode stack.

A can is part of a housing of a electrode stack and an electrolyte. A can may be a rigid housing. A can may be the outer shell or casing of a battery cell. The can may also serve as one of the electrical contacts, i.e. the negative terminal or the positive terminal. The can may be formed round (cylindrically, elliptic, oval), prismatic, or custom-made. Cylindrical cells, like the widely-used 18650 or 21700 cells, may have a cylindrical can. The can may be made of metal, such as steel or aluminum, to provide a robust and durable enclosure and to efficiently conduct electricity. A housing may comprise a can and one or two lids to close the can on the sides parallel to a top of a bottom of an electrode stack.

A lid is also part of the housing of a battery cell. A lid may be formed as a battery cap or a battery cover. A lid may also be formed as an intermediate piece, e.g. a disc, that is covered by an additional cap. A lid may be arranged on the top and/or bottom of a round cell. A lid may seal the interface between the respective lid and a can, such that no electrolyte and/or gas can exit and/or enter a battery cell.

A lid can be connected to a current collector, e.g., by crimping, stapling, pinning, screwing, and/or welding.

By connecting a lid directly with the current collector any intermediate contact means can be spared. This can provide a lighter battery cell and a battery cell with less parts, i.e. a less complex battery cell.

An embodiment of the first aspect is related to a battery cell,
wherein the lid comprises one or more deepenings through which the lid is connected to the one or both of the current collectors of the electrode stack .

A deepening for a lid can refer to a recessed area or indentation designed into the lid. Additionally or alternatively, a deepening can be an area where a cross-section of the lid is thinner. A deepening can be formed as a circular groove or channel. A deepening can further be formed of another material as a surroundings of a deepening.

A deepening can be used for a direct connection of the lid to one or more current collectors of the electrode stack. For example, a deepening can be used for welding, crimping and/or pinning/stapling the lid to one or more current collectors. If the cross-section of a lid in a deepening is thinner, a welding process needs less energy to weld through the lid in order to directly connect the lid to one or more current collectors. A deepening can further function as a optical and/or mechanical guide for a welding used for directly connecting the lid to one or more current collectors.

An embodiment of the first aspect is related to a battery cell,
wherein one or more deepenings have a radial dimension that is larger than their concentric dimension.

For example, a deepening can be formed as a trench going from near the center of a lid to near the edge of the lid. In this way, a plurality of trenches can be arranged on the lid, such that the extend radially and are conformally distributed on the lid. When the lid is welded to one or more current collectors through these conformally arranged deepenings, a balanced connection of the lid to the electrode stack can be achieved. Furthermore, an area for connecting the lid to a current collector can be increased/maximized, while on the same time stiffness and structural integrity of the lid can be maintained.

An embodiment of the first aspect is related to a battery cell,
wherein one or more deepenings have a concentric dimension that is larger than their radial dimension.

For example, a deepening can be formed as a trench around a whole circumference of a lid. Such a trench can be formed circular, in particular for a circular lid configured for a connection to a cylindrical battery cell. In this case, also the electrode stack can be formed circular and a current collector on the side of the electrode stack may also be circular. Then the lid can be welded through the circular trench to the cylindrical electrode stack.

In case, the battery cell has a different form, e.g. rectangular or prismatic, a deepening can also be formed along a whole circumference of a rectangular lid. The connection of the lid to an electrode stack can be realized by welding the rectangular trench.

A circumferential trench can also be used to weld a lid to a can, in particular after the lid has been welded to an electrode stack. If the lid is made of metal, the electrode connected to the lid can then be electrically connected to the can as well. Furthermore, a lid welded to a can may provide an effective sealing of the interface between the lid and the can.

A lid can comprise a plurality of concentrically arranged trenches. When the lid is welded to one or more current collectors through these conformally arranged concentrical deepenings, a balanced connection of the lid to the electrode stack can be achieved. Furthermore, a maximized area for connecting the lid to a current collector can be achieved, while on the same time stiffness and structural integrity of the lid can be maintained.

An embodiment of the first aspect is related to a battery cell,
wherein deepenings are concentrically and/or radially shifted.

A lid can comprise triangular-shaped deepenings that are arranged with the same distance to the lid center on the lid area and are spaced, e.g., by an angle of 60 degrees from the middle of one deepening to the middle of an adjacent deepening. In this case, six deepenings can be arranged concentrically on the lid.

Additionally or alternatively, a lid can comprise circular deepenings that are arranged with an increasing distance to the lid center on a straight line that extends from the lid center to the edge of the lid. Further deepenings on a plurality of other lines that are spaced by a predefined angular distance relative to the lid center can be formed on a lid. This forms a pattern for a balanced connection of a lid to a current collector by a plurality of deepenings.

An embodiment of the first aspect is related to a battery cell,
wherein the lid comprises one or more distal deepenings adjacent to an edge of the lid such that an outer side of each deepening forms an area essentially parallel to the can.

A distal deepening can be formed on a concentric circle and distal to a center of a lid. Additionally or alternatively, a distal deepening can be connected to other deepenings on the lid, e.g. radially formed deepenings. A distal deepening can be formed as a plurality of deepenings that are separated by non-deepened areas (in this case the deepenings can be arranged on a virtual concentrical line/circle). For example, four distal deepenings can be formed in a distance of <1 cm to the edge of the lid, wherein a center of each of the deepenings is spaced 90 degrees apart from an adjacent deepening.

The one or more distal deepenings can be used as a thermal resistance for thermal energy that is dissipated when the lid is welded to a can. Due to the thermal resistance, the welding operation can be performed with less energy and/or faster.

An embodiment of the first aspect is related to a battery cell,
wherein the lid is electrically connected to the can .

A lid can be connected to a can with the outer side of a concentric trench formed at the edge of a lid, as described above. Alternatively, a lid may be connected by one or more welding points on the edge of the lid. By connecting the lid electrically to the can the can and the lid will be on the same potential as the electrode that is connected to the lid. In this architecture, the can may be configured to provide a connection to the other electrode at bottom of the can. For example, the can may provide a pole connected to the other electrode in the center of the bottom side, wherein this part is electrically isolated (and sealed) from the rest of the can. Advantageously, electrical connections to both electrodes can then be taken from the bottom of the can. Additionally or alternatively, the can is configured to be closed at the bottom by a second lid. The second lid can also be configured such that both electrodes can be accessed by the second lid. For example, the second lid can be electrically connected to the can (and thereby connected to the electrode which is connected directly to the lid on the top of the can) and additionally provides in its center an isolated (and sealed) connection to the other electrode of the electrode stack. These architectures can provide a good connectivity and a low ohmic resistance.

Additionally or alternatively, a lid may be connected to a can by a non-permanent connection. In particular, this can be realized by connecting the inner side of a lid to the inner side of a can. Advantageously, a detachable connection between a lid and a can may be provided and on the same time the interface between the lid and the can may be sealed, e.g. by a seal comprised by the lid and/or a seal comprised by the can. This provides a battery cell with a detachable and sealed lid-can connection wherein the lid is electrically connected to the can and thereby the can is configured to form a part of an external electrical circuit.

An embodiment of the first aspect is related to a battery cell,
wherein the lid comprises a hole for providing an electrolyte to the electrode stack .

The hole can be arranged in the center of the lid. This can be in particular advantageous for architectures in which the lid is connected over the can to the bottom of the battery cell, such that both poles can be provided from the bottom of the battery cell. Then the electrolyte can be provided with a maximal distance to the battery poles.

An embodiment of the first aspect is related to a battery cell,
wherein the lid , in particular one or more deepenings , and the can are made of aluminum; and the lid is directly connected to the cathode.

An aluminum housing has a high conductivity and is in particular advantageous for contacting a lid is electrically to a can, e.g. in order to provide the potential of the cathode to the bottom of the cell.

An embodiment of the first aspect is related to a battery cell,
wherein the lid , in particular one or more deepenings , and the can are made of steel; and the lid is directly connected to the anode.

A steel housing is robust and can be used for various types of applications.

An embodiment of the first aspect is related to a battery cell,
wherein the lid comprises one or more deepenings connected to an anode current collector;
and one or more deepenings connected to a cathode current collector; and
wherein the deepenings connected to different electrodes are isolated from each other.

In one example, the current collectors of both electrodes cover a half circle each at the top of the electrode layer (which is adjacent to the top of the can) with an isolator between the two current collector areas. A corresponding lid comprises deepenings over both current collector areas. Furthermore, the lid comprises an isolator that isolates the part of the lid that is connected to the collector to the part of the lid that is connected to the anode.

In another example, one current collector is provided as a concentrical ring and is welded to a corresponding concentrical deepening to the lid. The current collector of the other electrode can be welded such that it is connected to a center of the lid, which is isolated from the rest of the lid. This architecture has the advantage that a busbar, which may be connected to the electrodes in order to connect a plurality of battery cells needs little or no adjustment. The busbar can be formed as a "concentric fork" with the same radius and width as the concentric current collector. Then the busbar only needs to be arranged concentrically to the lid. No further adjustment of the position of the busbar is necessary to meet the concentric current collector. The other side of the busbar can be attached to the center of an adjacent battery's lid in order to connect to a current collector of the other electrode type.

An embodiment of the first aspect is related to a battery cell,
wherein:
- one or more deepenings for one electrode type are electrically connected to the can ; and
- one or more deepenings for the other electrode type are electrically connected to a sealed contact in the lid , in particular in the center of the lid.

Forming a lid of aluminum facilitates a laser welding of the lid to one or more current collectors of an electrode stack.

A second aspect of the present disclosure is related to a method for manufacturing a battery cell,
comprising the steps:
- obtaining a electrode stack with a current collector of one electrode of the electrode stack at a top of the electrode stack;
- obtaining a lid configured to be arranged on a can configured to comprise the electrode stack;
- welding the lid to the current collector on the top of the electrode stack;
- arranging the lid-current collector in the can.

The lid can be connected to the electrode stack before the electrode stack is arranged in the can. In this way, a better control of the process (welding, crimping, screwing, etc.) to connect the lid to the electrode stack can be achieved. For example, a connection between the lid an the electrode stack can be analyzed visually or tested electrically, before being assembled with the can.

An embodiment of the second aspect is related to a method for manufacturing a battery cell,
comprising the step:
- pressing the lid and the electrode stack together with a pre-defined force.

When welding a lid to a current collector, both elements should to be in direct contact to each other. Gaps between the current collector and the lid can deteriorate a welding result. In order to avoid any gaps between a lid and a current collector, the lid can be pressed with a pre-defined force to the current-collector and/or to the electrode stack.

After the connection of the lid to the electrode stack (via the current collectors), the electrode stack can be inserted into the can. Afterwards the lid can be pressed into or just positioned on the can. In a next step the lid is welded to the can. In a next step, the electrolyte can be provided to the electrode stack, in particular through a hole in the center of the lid, which can be closed by a plug or by welding afterwards. The sequence circumvents the need for welding the current collectors of an electrode stack that is already soaked in electrolyte.

An embodiment of the second aspect is related to a method for manufacturing a battery cell,
comprising the step:
- after the welding, analyzing the connection between the lid and the current collector, in particular with respect to a porosity of a welding seam.

After welding the connection between a lid and a current collector, the connection needs to be impermeable for fluids, such as electrolyte or gas. Therefore, a quality check, e.g. a visual quality check, can be performed in order to analyze a welding result.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 illustrates a lid with deepenings according to an embodiment of this disclosure.
Fig. 2 illustrates a lid with deepenings according to an embodiment of this disclosure.
Fig. 3 illustrates a battery cell according to an embodiment of this disclosure.
Fig. 4 illustrates a top part of a battery cell according to an embodiment of this disclosure.
Fig. 5 illustrates a method for manufacturing a battery cell according to an embodiment of this disclosure.

In the following description reference is made to the accompanying figures which form part of the disclosure and which illustrate specific aspects in which the present disclosure can be understood. Identical reference signs refer to identical or at least functionally or structurally similar features.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

### Detailed description

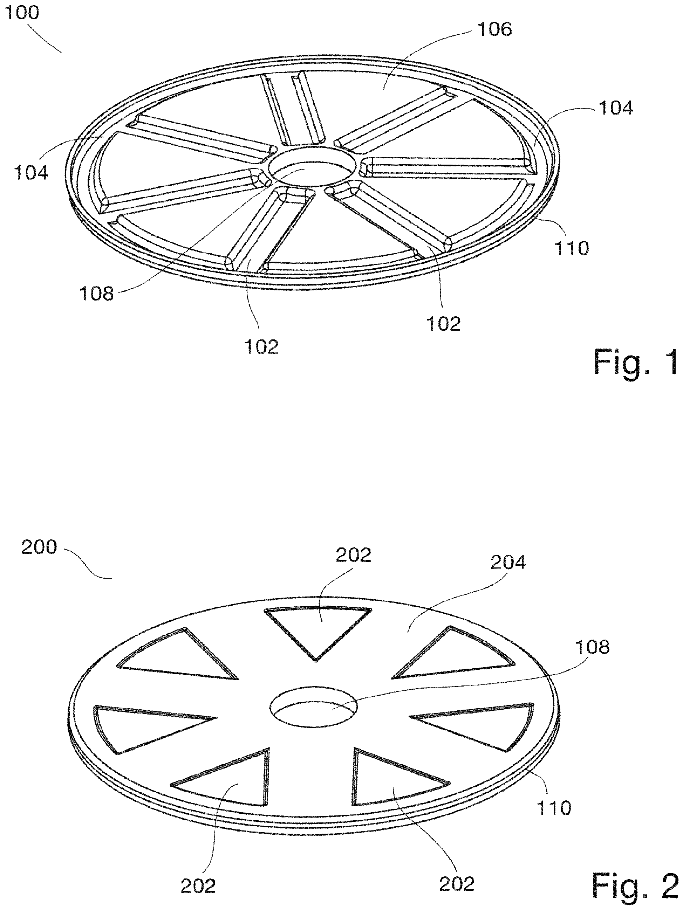

Fig. 1 illustrates a lid 100 with deepenings according to an embodiment of this disclosure. The lid is formed as a cap and is to be attached to a top part of the battery cell such that it seals a can and may provide contact to at least on electrode of the electrode stack. In many cases, in particularly in rechargeable lithium-ion cells, the cap includes several components such as a terminal, which is electrically connected to the internal cathode. A safety vent configured to release internal pressure in certain fault conditions. A sealing gasket to prevent the ingress of air and moisture and the egress of electrolyte.

The lid 100 comprises seven deepenings 102 that are formed as radial trenches from a hole 108 near the center of the lid. The radial deepenings 102 are pressed structures (pressed, e.g. by a deep drawing press) that cause a certain stiffness of the lid. Furthermore, the deepenings guide an automatic laser welding device (e.g. a welding robot) such that a welding seam is placed in the deepenings. By the welding operation the lid is mechanically and electrically connected to a current collector of an electrode which is part of an electrode stack (not shown) to be inserted into a cylindrical housing (not depicted) in a later step. Between the radial deepenings 102, the lid comprises flat areas 106 between to radial deepenings.

The lid can be made of steel. In this case the lid can be connected to the current collector of the anode of the electrode stack. The lid can also be made of aluminum. In this case the lid can be connected to the current collector of the cathode of the electrode stack. Through the hole 108, an electrolyte can be provided to the electrode stack. This can be done in particular after the lid has been welded to the current collector, the electrode stack has been placed in a can and the lid has been welded to the can. This sequence assures that all welds are completed before electrolyte is provided to the electrode stack. Welding near an electrolyte could be dangerous.

The lid has a further deepening 104, which is formed adjacent to a lid's edge such that an outer side 110 of the circular deepening forms an area essentially parallel to a can (not depicted). This area can be used to weld the lid to the can. The deepening 104 thereby causes a thermal resistance, which increases the efficacy of the welding operation.

Fig. 2 illustrates a lid 200 with deepenings according to an embodiment of this disclosure. The lid is formed for a cylindrical battery cell, similar to the lid of Fig. 1. However, instead of radial trenches, the lid comprises seven essentially triangular-shaped deepenings 202 that are separated by flat parts 204 of the lid.

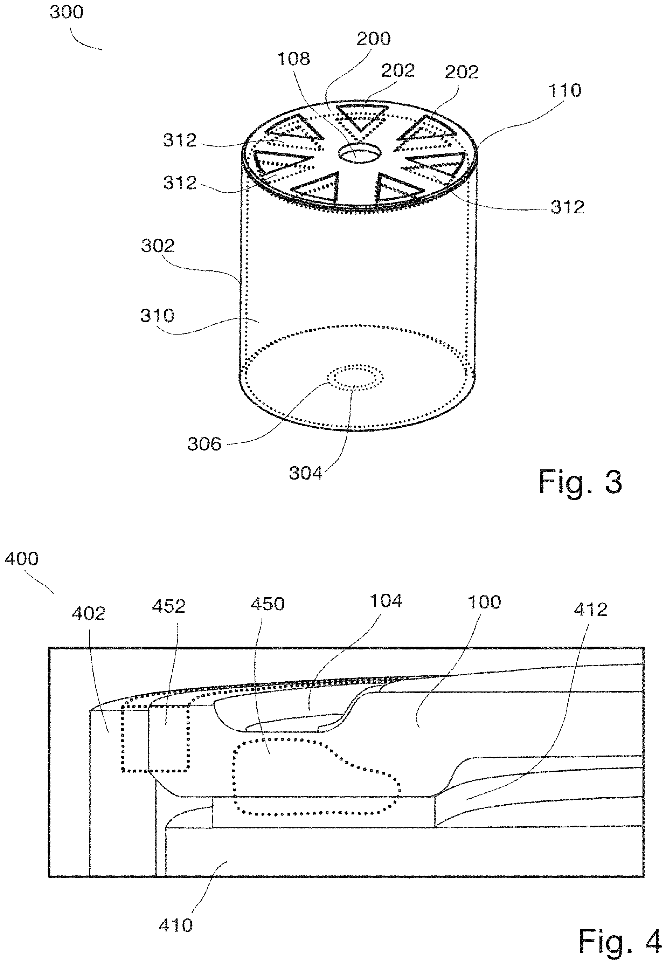

Fig. 3 illustrates a battery cell 300 according to an embodiment of this disclosure with a lid similar to the lid described in Fig. 2. The lid 200 is arranged on top of a can 302. The can is the outer shell or casing of the battery. It acts as a container for the internal components, such as the cathode, anode, separator, and electrolyte, and provides structural integrity to the battery. Cylindrical cells, like the widely-used 18650 or 21700 cells, have a cylindrical can.

Arranged in the can is a jelly role (wound-up electrode stack) 310. The jelly role has current collectors 312 of the cathode on its top. The current collectors are formed similar to the deepenings 202 of the lid 200, which facilitates an mechanical/electrical connection by welding (or stapling). The lid 200 is electrically connected to the can 302, such that the can has the same potential as the cathode. Therefore, the lid as well as the can are made of aluminum. At the bottom, the can has also a pole 304 that is connected to the anode of the electrode stack. This pole is electrically isolated from the rest of the can. By the described architecture, both poles of the battery cell, the anode and the cathode can be tapped into at the bottom of the battery cell.

Fig. 4 illustrates a cross-section of a top part 400 of a battery cell according to an embodiment of this disclosure. A lid 100 is arranged on a can 402 and on a current collector 412 of an electrode stack 410. The lid is electrically and mechanically connected to the current collector 412 by a welding seam 450.

Furthermore, the lid 100 is connected to the can 402 by a welding seam 452. Since the lid and the can made of metal, the can is electrically connected to the electrode of the connected current collector 412.

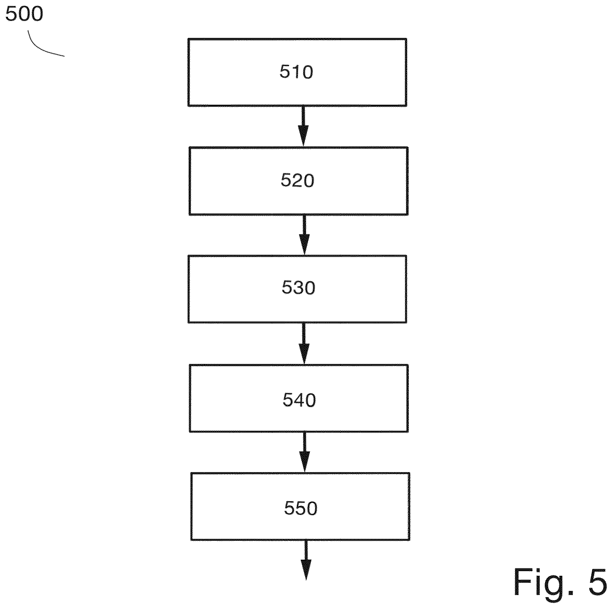

Fig. 5 illustrates a method 500 for manufacturing a battery cell according to an embodiment of this disclosure. In a first step 510, a jelly role is obtained with a current collector on the top of the jelly role. The current collector may be formed of a plurality of folded taps that are formed on the top of the electrode stack. In a second step 520, a lid is obtained and oriented in such a way that deepenings of the lid are arranged without any gap on the current collector(s) on the top of the jelly role. In a third step 530, the lid is welded to the current collector and thereby fixed to the jelly role. The welding is performed only in the deepenings that are arranged directly over the current collector areas. After welding, the weld seam is inspected for quality by a camera. In a fourth step 540, the assembly of lid and current collector is arranged into a can and the lid is welded to the can. In a fifth step 550, which is started after the welding has been finished, an electrolyte is provided to the electrode stack in the can over a hole in the lid. This hole is finally sealed with a plug.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference signs

- 100: lid with deepenings
- 102: radial deepenings
- 104: circular deepening
- 106: flat lid area
- 108: center hole
- 110: outer side of deepening
- 200: lid
- 202: triangular deepenings
- 204: flat part of lid
- 300: 300
- 302: can
- 304: anode pole
- 310: electrode stack
- 312: current collectors
- 400: top part
- 402: can
- 410: jelly role
- 412: current collector
- 450: welding seam
- 452: welding seam
- 500: method for manufacturing battery cell
- 510: obtaining jelly role
- 520: obtaining lid
- 530: welding lid to jelly role
- 540: filling can
- 550: providing electrolyte

## Claims

1. Battery cell,
comprising:
- an electrode stack (310) with two electrode layers, an anode layer and a cathode layer, wherein each electrode layer comprises a current collector (312);
- a can (302) that comprises the electrode stack;
- a lid (100) arranged on top of the can and directly connected to one or both current collectors of the electrode stack.

2. The battery cell according to preceding claim,
wherein the lid (100) comprises one or more deepenings (102) through which the lid is connected to the one or both of the current collectors (312) of the electrode stack (310).

3. The battery cell according to the preceding claim,
wherein one or more deepenings (102) have a radial dimension that is larger than their concentric dimension.

4. The battery cell according to the preceding two claims,
wherein one or more deepenings (102) have a concentric dimension that is larger than their radial dimension.

5. The battery cell according to one of the preceding three claims,
wherein deepenings (102) are concentrically and/or radially shifted.

6. The battery cell according to one of the preceding four claims,
wherein the lid (100) comprises one or more distal deepenings (102) adjacent to an edge of the lid such that an outer side of each deepening forms an area essentially parallel to the can.

7. The battery cell according to one of the preceding claims,
wherein the lid (100) is electrically connected to the can (302).

8. The battery cell according to one of the preceding claims,
wherein the lid (100) comprises a hole (108) for providing an electrolyte to the electrode stack (310).

9. The battery cell according to one of the preceding claims 2-8,
wherein the lid (100), in particular one or more deepenings (102), and the can (302) are made of aluminum; and
the lid is directly connected to the cathode.

10. The battery cell according to one of the preceding claims 2-9,
wherein the lid (100), in particular one or more deepenings (102), and the can are made of steel; and
the lid is directly connected to the anode.

11. The battery cell according to one of the preceding claims 2-10,
wherein the lid (100) comprises one or more deepenings (102) connected to an anode current collector (312);
and one or more deepenings connected to a cathode current collector (312); and
wherein the deepenings connected to different electrodes are isolated from each other.

12. The battery cell according to the preceding claim,
wherein:
- one or more deepenings (102) for one electrode type are electrically connected to the can (302); and
- one or more deepenings (102) for the other electrode type are electrically connected to a sealed contact in the lid (100), in particular in the center of the lid.

13. Method for manufacturing a battery cell,
comprising the steps:
- obtaining a electrode stack (310) with a current collector (312) of one electrode of the electrode stack at a top of the electrode stack;
- obtaining a lid (100) configured to be arranged on a can (310) configured to comprise the electrode stack;
- welding the lid to the current collector on the top of the electrode stack;
- arranging the lid-current collector in the can.

14. The method according to the preceding claim,
comprising the step:
- pressing the lid (100) and the electrode stack (310) together with a pre-defined force.

15. The method according to one of the preceding two claims,
comprising the step:
- after the welding, analyzing the connection between the lid (100) and the current collector (312), in particular with respect to a porosity of a welding seam.
